# EUROPEAN PATENT APPLICATION

(11) **EP 3 402 213 A2**
(43) Date of publication of application: **14.11.2018**
(21) Application number: 18170797.7
(22) Date of filing: 04.05.2018
(51) Int. Cl.: H04N 21/845, H04N 21/854, H04N 21/6405, H04N 21/6408, H04N 21/24

(54) **MULTICAST ADAPTIVE BITRATE CHANNEL SELECTION IN ACCESS NETWORKS**

(30) Priority: 08.05.2017 US 201715589273
(71) Applicant: Alcatel-Lucent USA Inc., Murray Hill, NJ 07974-0636 (US)
(72) Inventor: AKHTAR, Shahid, Richardson, TX Texas 75082 (US)
(74) Representative: Bryers LLP

(57) **Abstract**

A network element (100) comprises a memory (1004) storing a data structure arrangement. The data structure arrangement includes: an ordered list of asset blocks (CHVq_1, ... CHVq_N) having a head end and a tail end, each of the asset blocks indicating a number of clients (102, 104, 106, 108, 110, 112) in an access network (AN1, AN2, AN3) currently streaming video content of a corresponding channel, the asset blocks being ordered according to the number of clients currently streaming the video content for each channel; and a border structure block (208) storing a pointer to a border asset block within the ordered list of asset blocks, the pointer to the border asset block defining an active set of multicast channels for the access network, and causing the multicast controller to direct a termination node to provide the active set of multicast channels to the clients in the access network.

## Description

### BACKGROUND

### Field

One or more example embodiments relate to multicast adaptive bitrate (m-ABR) Channel or video quality (VQ) selection in access networks.

### Discussion of Related Art

Adaptive Bit Rate (ABR) video is used to provide video streaming services to end users via Internet Protocol (IP) networks such as the Internet. ABR video adapts video transmission to conditions of the path or paths available to the client, and produces as good a quality video as allowed by the network. However, ABR generally requires a separate stream for each client. So, as the number of clients grows, the bandwidth required to support the video transmission within the network grows similarly. Additionally, ABR video cannot guarantee a certain video quality (VQ) or that ABR video would be free of buffering events in which video stops playing due to network conditions.

Multicast Adaptive Bit Rate (m-ABR) is a technology in which higher VQ levels of at least some of the more popular channels (or streams) are sent via multicast to all clients who cache chunks of video content. The caches at the clients are generally relatively small, but sufficient for live traffic. If an end user requests chunks of video content for a channel, which happen to be in the local cache at the client, then the chunks of content are served to the end user from the client. Otherwise, the chunks of content are "proxied" from a content provider.

### SUMMARY

According to at least one example embodiment, a network element includes a memory storing a data structure arrangement. The data structure arrangement includes: an ordered list of asset blocks having a head end and a tail end, each of the asset blocks indicating a number of clients in an access network currently streaming video content of a corresponding channel, the asset blocks being ordered according to the number of clients currently streaming the video content for each channel; and a border structure block storing a pointer to a border asset block within the ordered list of asset blocks, the pointer to the border asset block defining an active set of multicast channels for the access network, and causing the network element (e.g., multicast controller) to direct a termination node to provide the active set of multicast channels to the clients in the access network.

At least one other example embodiment provides a network element including: a memory storing computer-readable instructions and an ordered list of asset blocks having a head end and a tail end, each of the asset blocks indicating a number of clients in an access network currently streaming video content of a corresponding channel, the asset blocks being ordered according to the number of clients currently streaming the video content for each channel; and at least one processor coupled to the memory. The at least one processor is configured to execute the computer-readable instructions to: determine whether a first number of clients currently streaming video content for a first channel within the access network is greater than or equal to a second number of clients currently streaming video content for a first multicast channel within an active set of multicast channels for the access network, the multicast channels in the active set of multicast channels corresponding to a set of the asset blocks in the ordered list of asset blocks; determine whether addition of the first channel will violate a resource condition for the access network; and add the first channel to the active set of multicast channels if the addition of the first channel will not violate the resource condition for the access network.

At least one other example embodiment provides a network element including: a memory and at least one processor coupled to the memory. The memory stores computer-readable instructions and an ordered list of asset blocks having a head end and a tail end, each of the asset blocks indicating a number of clients in an access network currently streaming video content of a corresponding channel, the asset blocks being ordered according to the number of clients currently streaming the video content for each channel. The at least one processor is configured to execute the computer-readable instructions to: identify a request for a channel without a corresponding asset block in the ordered list of asset blocks; generate an asset block representing the requested channel in response to the request; initialize parameters for the generated asset block; and insert the generated asset block at the tail end of the ordered list.

### BRIEF DESCRIPTION OF THE DRAWINGS

The present invention will become more fully understood from the detailed description given herein below and the accompanying drawings, wherein like elements are represented by like reference numerals, which are given by way of illustration only and thus are not limiting of the present invention.
FIG. 1 is a network architecture according to an example embodiment.
FIG. 2 is a block diagram illustrating a memory structure including arrangement of data structures, according to an example embodiment.
FIG. 3 illustrates an example Channel/VQ block according to an example embodiment.
FIG. 4 is a flowchart illustrating a method for managing active multicast channels for an access network, according to an example embodiment.
FIG. 5 is a flowchart illustrating an example embodiment of a method for border change analysis.
FIG. 6 is a flowchart illustrating a method for handling a new Channel/VQ block, according to an example embodiment.
FIG. 7 is a flow chart illustrating a method for managing multicast streams within an access network, according to another example embodiment.
FIG. 8 provides a general architecture and functionality suitable for implementing functional elements described herein or portions of functional elements described herein.

It should be noted that these figures are intended to illustrate the general characteristics of methods, structure and/or materials utilized in certain example embodiments and to supplement the written description provided below. These drawings are not, however, to scale and may not precisely reflect the precise structural or performance characteristics of any given embodiment, and should not be interpreted as defining or limiting the range of values or properties encompassed by example embodiments. The use of similar or identical reference numbers in the various drawings is intended to indicate the presence of a similar or identical element or feature.

### DETAILED DESCRIPTION

Various example embodiments will now be described more fully with reference to the accompanying drawings in which some example embodiments are shown.

Detailed illustrative embodiments are disclosed herein. However, specific structural and functional details disclosed herein are merely representative for purposes of describing example embodiments. This invention may, however, be embodied in many alternate forms and should not be construed as limited to only the embodiments set forth herein.

Accordingly, while example embodiments are capable of various modifications and alternative forms, the embodiments are shown by way of example in the drawings and will be described herein in detail. It should be understood, however, that there is no intent to limit example embodiments to the particular forms disclosed. On the contrary, example embodiments are to cover all modifications, equivalents, and alternatives falling within the scope of this disclosure. Like numbers refer to like elements throughout the description of the figures.

Although the terms first, second, etc. may be used herein to describe various elements, these elements should not be limited by these terms. These terms are only used to distinguish one element from another. For example, a first element could be termed a second element, and similarly, a second element could be termed a first element, without departing from the scope of this disclosure. As used herein, the term "and/or," includes any and all combinations of one or more of the associated listed items.

When an element is referred to as being "connected," or "coupled," to another element, it can be directly connected or coupled to the other element or intervening elements may be present. By contrast, when an element is referred to as being "directly connected," or "directly coupled," to another element, there are no intervening elements present. Other words used to describe the relationship between elements should be interpreted in a like fashion (e.g., "between," versus "directly between," "adjacent," versus "directly adjacent," etc.).

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

Specific details are provided in the following description to provide a thorough understanding of example embodiments. However, it will be understood by one of ordinary skill in the art that example embodiments may be practiced without these specific details. For example, systems may be shown in block diagrams so as not to obscure the example embodiments in unnecessary detail. In other instances, well-known processes, structures and techniques may be shown without unnecessary detail in order to avoid obscuring example embodiments.

In the following description, illustrative embodiments will be described with reference to acts and symbolic representations of operations (e.g., in the form of flow charts, flow diagrams, data flow diagrams, structure diagrams, block diagrams, etc.) that may be implemented as program modules or functional processes include routines, programs, objects, components, data structures, etc., that perform particular tasks or implement particular abstract data types and may be implemented using existing hardware at, for example, existing clients, gateways, nodes, controllers, computers, cloud based servers, web servers, application servers, etc. As discussed later, such existing hardware may include, *inter alia,* one or more Central Processing Units (CPUs), system-on-chip (SOC) devices, digital signal processors (DSPs), application-specific-integrated-circuits, field programmable gate arrays (FPGAs) computers or the like.

Although a flow chart may describe the operations as a sequential process, many of the operations may be performed in parallel, concurrently or simultaneously. In addition, the order of the operations may be re-arranged. A process may be terminated when its operations are completed, but may also have additional steps not included in the figure. A process may correspond to a method, function, procedure, subroutine, subprogram, etc. When a process corresponds to a function, its termination may correspond to a return of the function to the calling function or the main function.

As disclosed herein, the term "storage medium", "computer readable storage medium" or "non-transitory computer readable storage medium" may represent one or more devices for storing data, including read only memory (ROM), random access memory (RAM), magnetic RAM, core memory, magnetic disk storage mediums, optical storage mediums, flash memory devices and/or other tangible machine readable mediums for storing information. The term "computer-readable medium" may include, but is not limited to, portable or fixed storage devices, optical storage devices, and various other mediums capable of storing, containing or carrying instruction(s) and/or data.

Furthermore, example embodiments may be implemented by hardware, software, firmware, middleware, microcode, hardware description languages, or any combination thereof. When implemented in software, firmware, middleware or microcode, the program code or code segments to perform the necessary tasks may be stored in a machine or computer readable medium such as a computer readable storage medium. When implemented in software, a processor or processors will perform the necessary tasks.

A code segment may represent a procedure, function, subprogram, program, routine, subroutine, module, software package, class, or any combination of instructions, data structures or program statements. A code segment may be coupled to another code segment or a hardware circuit by passing and/or receiving information, data, arguments, parameters or memory contents. Information, arguments, parameters, data, etc. may be passed, forwarded, or transmitted via any suitable means including memory sharing, message passing, token passing, network transmission, etc.

The terms "including" and/or "having", as used herein, are defined as comprising (i.e., open language). The term "coupled", as used herein, is defined as connected, although not necessarily directly, and not necessarily mechanically. Terminology derived from the word "indicating" (e.g., "indicates" and "indication") is intended to encompass all the various techniques available for communicating or referencing the object/information being indicated. Some, but not all, examples of techniques available for communicating or referencing the object/information being indicated include the conveyance of the object/information being indicated, the conveyance of an identifier of the object/information being indicated, the conveyance of information used to generate the object/information being indicated, the conveyance of some part or portion of the object/information being indicated, the conveyance of some derivation of the object/information being indicated, and the conveyance of some symbol representing the object/information being indicated.

According to example embodiments, clients, gateways, nodes, controllers, computers, cloud based servers, web servers, application servers, etc., may be (or include) hardware, firmware, hardware executing software or any combination thereof. Such hardware may include one or more Central Processing Units (CPUs), system-on-chip (SOC) devices, digital signal processors (DSPs), application-specific-integrated-circuits (ASICs), field programmable gate arrays (FPGAs) computers or the like configured as special purpose machines to perform the functions described herein as well as any other well-known functions of these elements. In at least some cases, CPUs, SOCs, DSPs, ASICs and FPGAs may generally be referred to as processing circuits, processors and/or microprocessors.

The clients, gateways, nodes, controllers, computers, cloud based servers, web servers, application servers, etc., may also include various interfaces including one or more transmitters/receivers connected to one or more antennas, a computer readable medium, and (optionally) a display device. The one or more interfaces may be configured to transmit/receive (wireline and/or wirelessly) data or control signals via respective data and control planes or interfaces to/from one or more network elements, such as switches, gateways, termination nodes, controllers, servers, clients, etc.

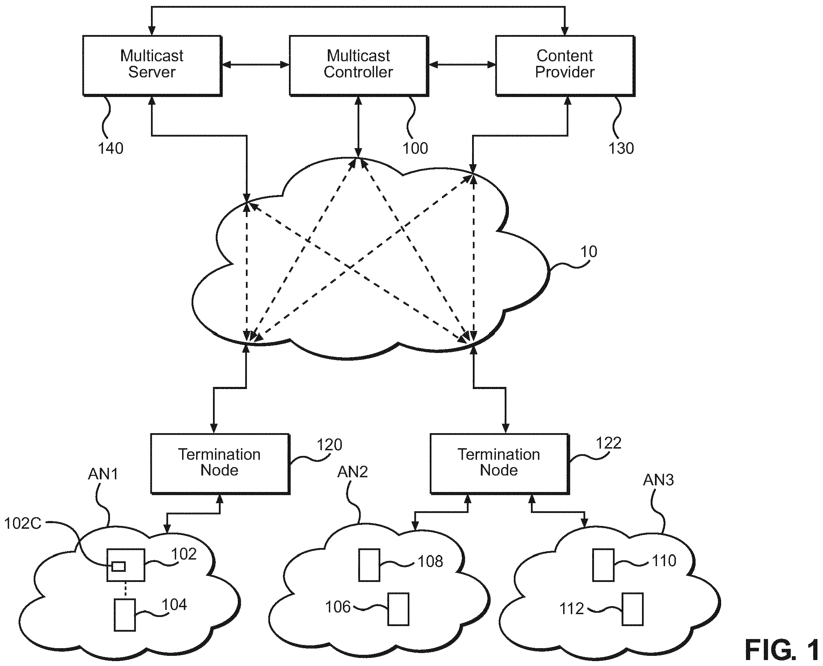

FIG. 1 is a diagram illustrating a network architecture according to an example embodiment.

Referring to FIG. 1, the network architecture includes a multicast controller 100, a multicast server 140, a content provider 130, termination nodes 120 and 122, and access networks AN1, AN2, and AN3. Each of the multicast controller 100, the multicast server 140, the content provider 130, and the termination nodes 120 and 122 are connected to a core IP network 10, such as the Internet.

The multicast controller 100 may communicate with the content provider 130 and the multicast server 140 via various interfaces, which are well-known in the art. The content provider 130 and the multicast server 140 may also communicate with one another via various well-known interfaces.

The content provider 130, which may be an origin server or a Content Delivery Network (CDN), provides content (e.g., video content) in response to content requests from clients, such as embedded multicast clients in access networks. For example, the content provider 130 may store content corresponding to one or more videos, which may be requested by a client for streaming to an end user device. In this case, the content provider 130 may receive requests for video content for a particular channel (or stream), and respond to the requests by providing the requested content. The requested content may be provided in the form of chunks of video (e.g., in the 2 to 10 second range) encoded at different transmission rates. These chunks of video are sometimes referred to as assets. Though, for the purpose of simplicity, only one content provider 130 is illustrated, any number of content providers may be included in the network.

In the context of multicast ABR, the multicast server 140 is a server that provides the content from the content provider 130 via multicast transmission. In one example, the multicast server 140 acquires content (e.g., chunks of video) from the content provider 130, processes the acquired content, and streams the acquired content via multicast transmission.

Still referring to FIG. 1, the access networks AN1, AN2, and AN3 are networks that connect one or more clients (e.g., embedded multicast clients) at one or more customer premises equipments (CPEs) within a given access network to the IP core network 10. According to one or more example embodiments, a CPE may include a gateway, router, set-top box, or combination thereof (e.g., cable modem and/or gateway router, a combination thereof, etc.). Examples of access networks include shared media (access) networks (e.g., cable access networks, such as Data Over Cable Service Interface Specification (DOCSIS) networks, Gigabit Passive Optical Networks (GPONs), etc.) in which traffic for all clients travels over a shared physical medium, or non-shared media access networks (e.g., Digital Subscriber Line Access Multiplexer (DSLAM) networks) in which each customer may have a different associated physical medium.

In FIG. 1, access network AN1 includes clients 102 and 104 connected thereto, access network AN2 includes clients 106 and 108 connected thereto, and access network AN3 includes clients 110 and 112 connected thereto. Although FIG. 1 illustrates only three access networks, and only two clients within each access network, example embodiments should not be limited to this example. Rather, the network may include any number of access networks including any number of clients connected thereto.

Each of the access networks AN1, AN2, and AN3 terminates on the core IP network 10 via one of the termination nodes 120 and 122. Example termination nodes include cable modem termination systems (CMTSs), DSLAMs, Optical Line Terminals (OLTs), etc. In the example shown in FIG. 1, the termination node 120 terminates the access network AN1 on the core IP network 10, and the termination node 122 terminates the access networks AN2 and AN3 on the core IP network 10. Although not shown in FIG. 1, end users may connect to the access networks via respective home networks through, for example, a CPE, such as a gateway, router, set-top box or combination thereof.

Although FIG. 1 illustrates only two termination nodes 120 and 122, only one access node AN1 terminated by the termination node 120, and only two access networks AN2 and AN3 terminated by the termination node 122, example embodiments should not be limited to this example. Rather, the network may include any number of termination nodes, each of which may terminate any number of access networks.

According to at least some example embodiments, each of the clients 102, 104, 106, 108, 110 and 112 may be an embedded multicast client running on an electronic device, such as a CPE. The clients 102, 104, 106, 108, 110 and 112 may receive video content from the content provider 130 via unicast transmission through the core IP network 10, a termination node, and an access network, or via multicast transmission through the multicast server 140 the core IP network, a termination node, and an access network, and deliver the received video content to video content players at one or more end user devices (not shown), such as set-top boxes, mobile devices, smartphones, laptops, tablets, personal computers.

An embedded multicast client functions to join multicast groups and receive multicast content. Each embedded multicast client may include a cache to locally store chunks of video for a given channel (or stream) and video quality (VQ) level (collectively referred to as a Channel/VQ pair). A Uniform Resource Locator (URL) or Uniform Resource Identifier (URI) associated with a chunk or chunks of video may be used to identify (or, alternatively, request) the Channel/VQ pair by using a filtering method on the URL (or URI) character string. Operators may setup a directory hierarchy for content with channel and VQ names to allow such filtering. By locally storing chunks of video for Channel/VQ pairs in the cache at the embedded multicast client, requests for the Channel/VQ pairs from an end user may be provided without sending a request to the content provider 130.

Although example embodiments are described in most instances with regard to Channel/VQ pairs, it should be understood that example embodiments are applicable to both channels and Channel/VQ pairs. For example, where example embodiments are discussed and explained with regard to Channel/VQ pairs, the example embodiments may be similarly applicable to channels, rather than Channel/VQ pairs. In this regard, for example, the asset lists may include channel blocks, rather than Channel/VQ blocks, etc. Furthermore, a reference to a channel may be indicative of the channel itself or a Channel/VQ pair.

Further, in at least some instances, a chunk of video may be referred to as an asset, and a chunk or chunks of video may be referred to as video content.

When client 102, for example, receives a request relating to a Channel/VQ pair (e.g., in the form of a URL or URI) from an end user (e.g., via a video player running on the end user device), the client 102 checks whether the requested chunk of video content for the Channel/VQ pair are available at the local cache. If the requested chunk of video content is available locally, then the client 102 provides the requested content to the end user device. If the chunk of video content for the requested Channel/VQ pair is not available locally, then the client 102 sends a request for the video content for the requested Channel/VQ pair to the content provider 130. Upon receiving the request from the client 102, the content provider 130 provides the requested video content to the client 102 via the core IP network 10, the termination node 120 and the access network AN1. The client 102 then provides the content to the player for playback at the end user.

Still referring to FIG. 1, the client 102 sends each request (including the URL or URI) to the multicast controller 100 to notify the multicast controller 100 that video content from a particular Channel/VQ pair is being requested by the client 102. In this request, the client 102 appends an access network identifier (ID) to inform the multicast controller 100 of the specific access network in which the client 102 is located. This access network ID may be configured by the operator when the client is initialized, such that the multicast controller 100 learns of the addresses of all or substantially all clients in a given access network.

The multicast controller 100 is a device that controls the availability of content for multicast channels (or streams) in an access network (e.g., via a termination node). The multicast controller 100 has a socket (e.g., algorithm and data) for each access network, and is configured to control multicast channels for each access network independently.

Periodically the multicast controller 100 may send a list of popular Channel/VQ pairs to the termination node, a designated client in the access network or each client in the access network based on the asset list. The list of popular channels may include an active set of multicast channels (discussed in more detail later), wherein the active set of multicast channels includes Channel/VQ pairs corresponding to asset blocks above (and including) a border asset block in an asset list (as also discussed in more detail later). The termination node, the designated client in the access network or each client in the access network may be collectively referred to as a node or nodes.

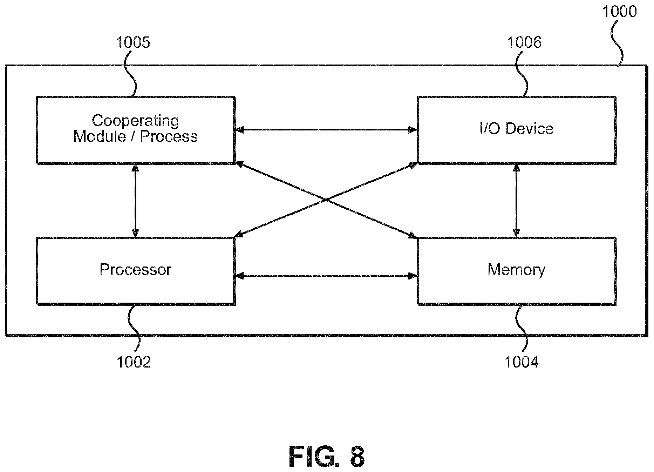

FIG. 8 depicts a high-level block diagram of a computer or computing device suitable for use in implementing the multicast controller 100 shown in FIG. 1. Although not specifically described herein, the general architecture and functionality shown in FIG. 8 may also be suitable for implementing one or more of the multicast server, the content provider, gateways, end user devices, etc.

Referring to FIG. 8, the computer 1000 includes one or more processors 1002 (e.g., a central processing unit (CPU) or other suitable processor(s)) and a memory 1004 (e.g., random access memory (RAM), read only memory (ROM), and the like). The computer 1000 also may include a cooperating module/process 1005. The cooperating process 1005 may be loaded into memory 1004 and executed by the processor 1002 to implement functions as discussed herein and, thus, cooperating process 1005 (including associated data structures) may be stored on a computer readable storage medium (e.g., RAM memory, magnetic or optical drive or diskette, or the like).

The computer 1000 also may include one or more input/output devices 1006 (e.g., a user input device (such as a keyboard, a keypad, a mouse, and the like), a user output device (such as a display, a speaker, and the like), an input port, an output port, a receiver, a transmitter, one or more storage devices (e.g., a tape drive, a floppy drive, a hard disk drive, a compact disk drive, and the like), or the like, as well as various combinations thereof).

While one or more example embodiments will be described from the perspective of the multicast controller 100 (or other applicable device), it will be understood that one or more example embodiments discussed herein may be performed by the one or more processors (or processing circuitry) at the multicast controller 100 (or other applicable device).

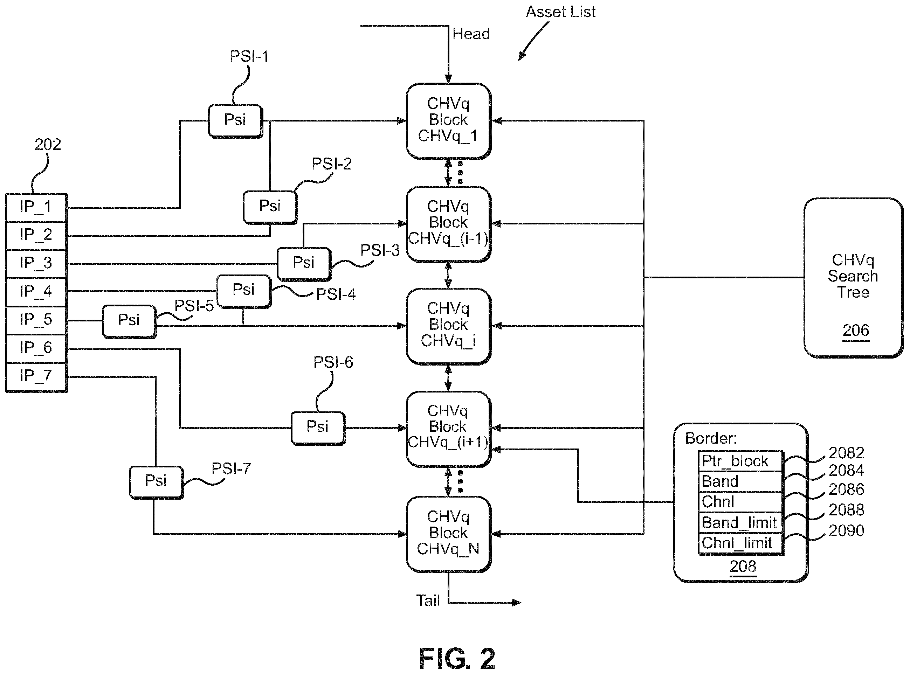

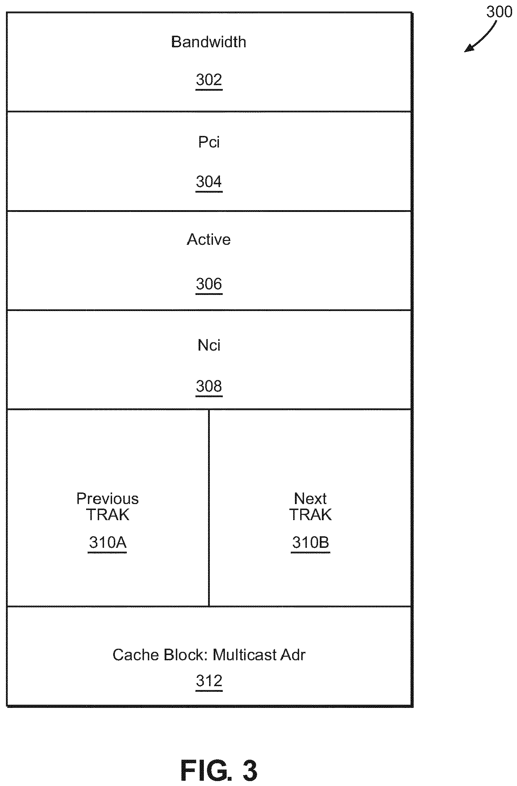

Still referring to FIG. 8, the memory 1004 of the multicast controller 100 may store data structures for implementing example embodiments discussed herein. Examples of these data structures, and an arrangement of the data structures in a memory, are discussed in more detail below with regard to FIGS. 2 and 3.

FIG. 2 is a block diagram illustrating a memory structure including an arrangement of data structures, according to an example embodiment.

Referring to FIG. 2, the memory 1004 stores an IP address hash table 202, per stream blocks (also sometimes referred to herein as per-stream blocks or stream blocks) PSI-1 through PSI-7, Channel/VQ blocks CHVq_1,...CHVq_(i-1), CHVq_i, CHVq_(i+1), ..., CHVq_N, a Channel/VQ search tree 206, and a border block 208.

The IP address hash table 202 is a hash table of source IP addresses of clients in an access network, which store pointers to the PSI blocks PSI-1 through PSI-7. In the example shown in FIG. 2, the IP address hash table 202 includes IP addresses IP_1 through IP_7.

Each of the per stream blocks PSI-1 through PSI-7 is a data structure having a Psi field and a pointer field. The Psi field stores a time stamp of the last time that a particular IP address or client (in the IP address hash table) has requested a particular Channel/VQ pair (e.g., via a URL or URI). The pointer field includes a pointer to a Channel/VQ block corresponding to the particular Channel/VQ pair to which the IP address is tuned (or streaming).

In the example shown in FIG. 2, the Psi field at per stream block PSI-4 stores a time stamp indicating the time of receipt for the most recent request for the Channel/VQ pair i (corresponding to Channel/VQ block CHVq_i) by the IP address IP_4, and a pointer ptr_CHVq_i pointing to the location of the Channel/VQ block CHVq_i in the memory. The Psi field at per stream block PSI-5 stores a time stamp indicating the time of receipt for the most recent request for the Channel/VQ pair i (corresponding to Channel/VQ block CHVq_i) by the IP address IP_5, and a pointer ptr_CHVq_i pointing to the location of the Channel/VQ block CHVq_i. The Psi field at per stream block PSI-6 stores a time stamp indicating the time of receipt for the most recent request for the Channel/VQ pair i+1 (corresponding to Channel/VQ block CHVq_(i+1)) by the IP address IP_6, and a pointer ptr_CHVq_(i+1) pointing to the location of the Channel/VQ block CHVq_(i+1) in the memory.

A Channel/VQ block is a data structure storing information associated with a particular Channel/VQ level pair (also referred to herein as a Channel/VQ pair). A Channel/VQ level pair is indicative of a video channel (or stream) and associated video quality (VQ) for the chunks (also referred to as assets) of the online video content associated with the channel (or stream). Individual chunks of video may be encoded at different transmission rates. Chunks may be generally in the 2 to 10 second range. In the example shown in FIG. 2, each of the Channel/VQ blocks CHVq_1,...CHVq_(i-1), CHVq_i, CHVq_(i+1),..., CHVq_N corresponds to a respective Channel/VQ pair 1,...i-1, i, i+1,..., N.

The multicast controller 100 maintains the Channel/VQ blocks CHVq_1 through CHVq_N in an ordered, doubly-linked list. The ordered, doubly-linked list of Channel/VQ blocks is sometimes referred to herein as an asset list.

In the asset list, the Channel/VQ blocks CHVq_1 through CHVq_N are arranged in descending order between a head (or head-end) and a tail (or tail-end) of the asset list according to the number (Nci) of IP addresses currently tuned into the corresponding Channel/VQ pairs 1 through N. In this example, among the Channel/VQ pairs 1 through N, Channel/VQ pair 1 has the highest Nci value (most IP addresses currently tuned into the Channel/VQ pair), whereas channel N has the lowest Nci value (least number of IP addressed tuned into the Channel/VQ pair). Thus, Channel/VQ block CHVq_1 is arranged at the head of the asset list, whereas Channel/VQ block CHVq_N is arranged at the tail of the asset list.

FIG. 3 illustrates a structure of an example embodiment of a Channel/VQ block.

Referring to FIG. 3, the Channel/VQ block stores parameters associated with a corresponding Channel/VQ pair. In this example, the Channel/VQ block 300 includes: a Bandwidth field 302; a Pci field 304; an Active field 306; an Nci field 308; a Previous TRAK field 310A; a Next TRAK field 310B; and a Cache Block field 312.

The Bandwidth field 302 stores a constant bandwidth required for the Channel/VQ pair. The Pci field 304 stores a time Pci at which a new request for the particular Channel/VQ pair was received from an IP address. The Active field 306 stores a flag bit indicating whether the given Channel/VQ block is actively multicast in the access network. The flag bit (e.g., a bit having a value of '1' or '0') may be set to 'True' when the Channel/VQ pair is actively multicast, but may be set to 'False' when the Channel/VQ pair is not actively multicast in the access network. As used herein, 'True' may correspond to a value of '1' or '0', and 'False' may correspond to the other of '1' and '0'.

As used herein, a Channel/VQ pair being actively multicast refers to a Channel/VQ pair currently being provided to clients via multicast in an access network as well as a Channel/VQ pair available for streaming to clients via multicast transmission in an access network.

The Nci field 308 stores a number of streams or IP addresses currently requesting (tuned to) the given Channel/VQ pair. The Previous TRAK field 310A stores a pointer to a previous Channel/VQ block in the asset list, and the Next TRAK field 310B stores a pointer pointing to a next Channel/VQ block in the asset list. According to example embodiments, the previous Channel/VQ block refers to the Channel/VQ block in the asset list having a next highest Nci value among the Channel/VQ blocks in the asset list, and the next Channel/VQ block refers to the Channel/VQ block in the asset list having a next lowest Nci value among the Channel/VQ blocks in the asset list. In the example shown in FIG. 2, the Previous TRAK field 310A at the Channel/VQ block CHVq_i stores a pointer to the Channel/VQ block CHVq_(i-1), and the Next TRAK field 310B at the Channel/VQ block CHVq_i stores a pointer to the Channel/VQ block CHVq_(i+1). The Cache block field 312 may store a multicast address assigned to the Channel/VQ pair or other relevant parameters.

Returning to FIG. 2, the border block 208 identifies a border Channel/VQ block among the Channel/VQ blocks CHVq_1 through CHVq_N in the asset list. The border Channel/VQ block is a dividing line between Channel/VQ pairs that are actively multicast into the access network, and those that are not. That is, for example, Channel/VQ pairs associated with the Channel/VQ blocks above (and including) the border Channel/VQ block (e.g., between, and including, the border and the head of the asset list) are actively multicast into the access network (e.g., the flag in the Active field of the respective Channel/VQ block is set to 'True'), whereas Channel/VQ pairs associated with the Channel/VQ blocks below the border Channel/VQ block (e.g., between the border and the tail of the asset list) are not actively being multicast into the access network (e.g., the flag in the Active field of these respective Channel/VQ blocks is set to 'False').

According to at least some example embodiments, the border structure block 208 stores a pointer to a border Channel/VQ (or asset) block within the ordered list of assets. The pointer to the border Channel/VQ block defines an active set of multicast Channel/VQ pairs for the access network AN1, and causes the multicast controller 100 to send (e.g., only) those Channel/VQ pairs (e.g., in the list of popular channels) to the termination node, the designated client or the clients in the access network.

In the example embodiment shown in FIG. 2, the Channel/VQ block CHVq_(i+1) is identified as a border Channel/VQ block, and thus, the multicast controller 100 directs the termination node to filter out or exclude the Channel/VQ pairs i+2 through N, while allowing for active multicast of Channel/VQ pairs 1 through i+1 available to clients in the access network AN1.

Still referring to FIG. 2, in more detail, the border block 208 is a data structure that includes: a Ptr_block field 2082; a Band field 2084; a Chnl field 2086; a Band_limit field 2088; and a Chnl_limit field 2090. The Ptr_block field 2082 stores a pointer pointing to the border Channel/VQ block (e.g., Channel/VQ block CHVq_(i+1) in FIG. 2). The Band field 2084 stores a total bandwidth currently being injected into the access network as a result of the content currently being multicast into the access network. The Chnl field 2086 stores the total number of Channel/VQ pairs currently available for multicast to the access network. The Band_limit field stores a maximum bandwidth allowed for multicast channels within the access network. The Chnl_limit field 2090 stores a maximum number of channels allowed within the access network.

Still referring to FIG. 2, the Channel/VQ search tree 206 is a data structure used by the multicast controller 100 to identify a Channel/VQ block in the asset list in response to a request from a client for a particular Channel/VQ pair. The Channel/VQ search tree 206 allows relatively quick access to the Channel/VQ block when the channel and VQ information is known and/or obtained from a given URI.

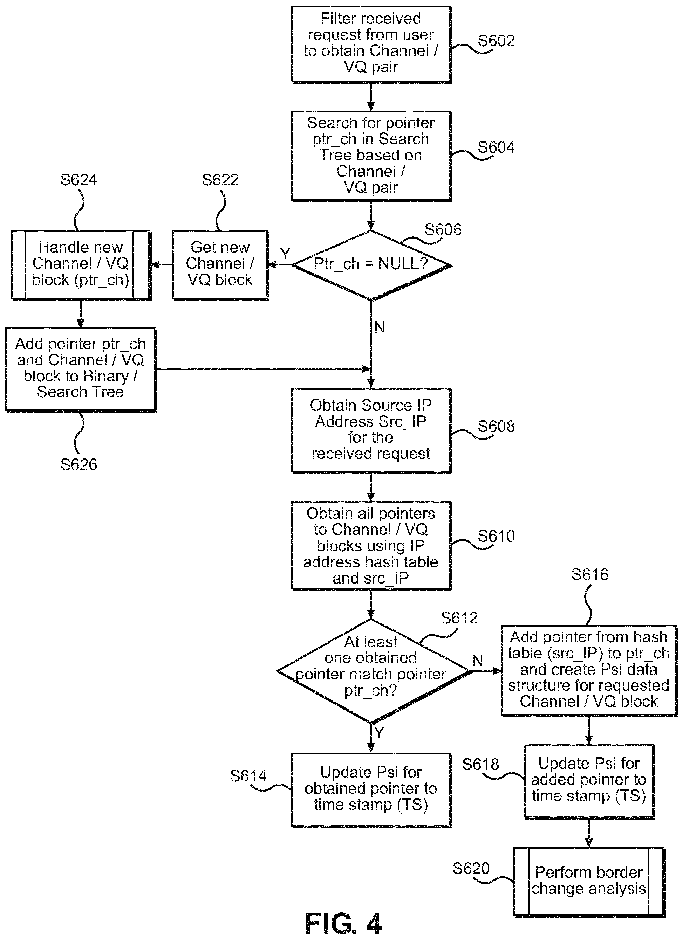

Further functionality of the multicast controller 100 will be discussed later with regard to FIGS. 4 through 7.

As mentioned above, if video content for a requested Channel/VQ pair is not available locally at the client 102, then the client 102 sends the request (including the URL or URI) to the content provider 130. In addition, in response to each Channel/VQ pair request, the client 102 sends the request to the multicast controller 100 to notify the multicast controller 100 to the request.

When the multicast controller 100 receives a request from the client 102, the multicast controller 100 determines whether changes to the Channel/VQ pairs currently being multicast in the access network AN1 are necessary. In one example, the multicast controller 100 determines whether changes (e.g., adding, removing and/or rearranging of Channel/VQ blocks) should be made to the asset list for the access network AN1. If changes to the asset list are needed, then the multicast controller 100 implements the necessary changes, and informs the access network AN1 accordingly (e.g., by sending an updated list of popular channels to the termination node 120, a designated client in the access network, or each client in the access network).

FIG. 4 is a flow chart illustrating a method for managing multicasting of channels within an access network, according to an example embodiment. For example purposes, the example embodiment shown in FIG. 4 will be described with regard to FIGS. 1-3, and more particularly with regard to an example in which the client 102 in access network AN1 is requesting Channel/VQ pair i corresponding to Channel/VQ block CHVq_i.

Referring to FIGS. 1-4, at step S602 the multicast controller 100 filters the received request from the client 102 to identify the requested Channel/VQ pair i.

At steps S604 and S606, the multicast controller 100 determines whether a Channel/VQ block corresponding to the requested Channel/VQ pair i is currently present in the asset list for the access network AN1. In more detail, at step S604, the multicast controller 100 requests a pointer ptr_CHVq_i to the Channel/VQ block CHVq_i (corresponding to the requested Channel/VQ pair) from the Channel/VQ search tree 206.

If the Channel/VQ search tree 206 is able to provide the pointer ptr_CHVq_i to the Channel/VQ block CHVq_i based on the Channel/VQ pair (ptr_ch ≠ NULL at step S606), then the multicast controller 100 determines that the requested Channel/VQ block CHVq_i is present within the asset list for the access network AN1.

If the multicast controller 100 determines that the Channel/VQ block CHVq_i is present in the asset list, then the multicast controller 100 determines whether the source IP address for the received request is currently tuned to (streaming) the requested Channel/VQ pair i at steps S608 through S612.

In more detail, at step S608, the multicast controller 100 obtains the source IP address Src_IP for the received request. According to at least one example embodiment, the source IP address Src_IP may be included in the payload of the request, or may be obtained from the header information of the request. In at least one example embodiment, the source IP address Src_IP for the received request is the IP address of the client 102.

Once having obtained the source IP address Src_IP for the request, at step S610 the multicast controller 100 uses the IP address hash table 202 to identify and/or obtain all pointers (in the per stream blocks PSI-1 through PSI-7) associated with (or linked to) the source IP address Src_IP.

At step S612, the multicast controller 100 determines whether at least one of the identified pointers matches the pointer ptr_CHVq_i identified at step S604.

If a pointer identified at step S610 matches the pointer ptr_CHVq_i, then the multicast controller 100 determines that the source IP address Src_IP is currently tuned to the Channel/VQ pair i. The multicast controller 100 then updates the Psi field of the per stream block corresponding to the matching pointer ptr_CHVq_i with a time stamp TS indicating the current time, and the process terminates. In a more specific example with regard to the example shown in FIG. 2 and steps S612 and S614, if the source IP address Src_IP is IP address IP-5, then the multicast controller 100 updates the Psi field at per stream block PSI-5 with a time stamp TS since both the pointer obtained from the CHVq search tree 206 at step S604 and the pointer ptr_CHVq_i at the per stream block PSI-5 are the same.

Returning to step S612, if a pointer identified at step S610 does not match the pointer ptr_CHVq_i, then the multicast controller 100 determines that the source IP address Src_IP is not currently tuned to the requested Channel/VQ pair i, and the process proceeds to step S616. In a more specific example with regard to FIG. 2, if the source IP address Src_IP is IP address IP-6, then the multicast controller 100 identifies the pointer ptr_CHVq_(i+1) at the per stream block PSI-6 at step S610. In this case, at step S612, the multicast controller 100 determines that the identified pointer ptr_CHVq_(i+1) does not match the pointer ptr_CHVq_i obtained at step S604.

At step S616, the multicast controller 100 creates a new per stream block, including a Psi field and a pointer field including the pointer ptr_CHVq_i, between the source IP address Src_IP in the IP address hash table 202 and the Channel/VQ block CHVq_i. The multicast controller 100 may create and/or obtain a new per stream block by creating a new block from available memory in any well-known manner. Because methods for creating blocks such as this are well-known, a detailed discussion is omitted.

At step S618, the multicast controller 100 then updates the Psi field of the new per stream block with the current time TS (Psi = TS).

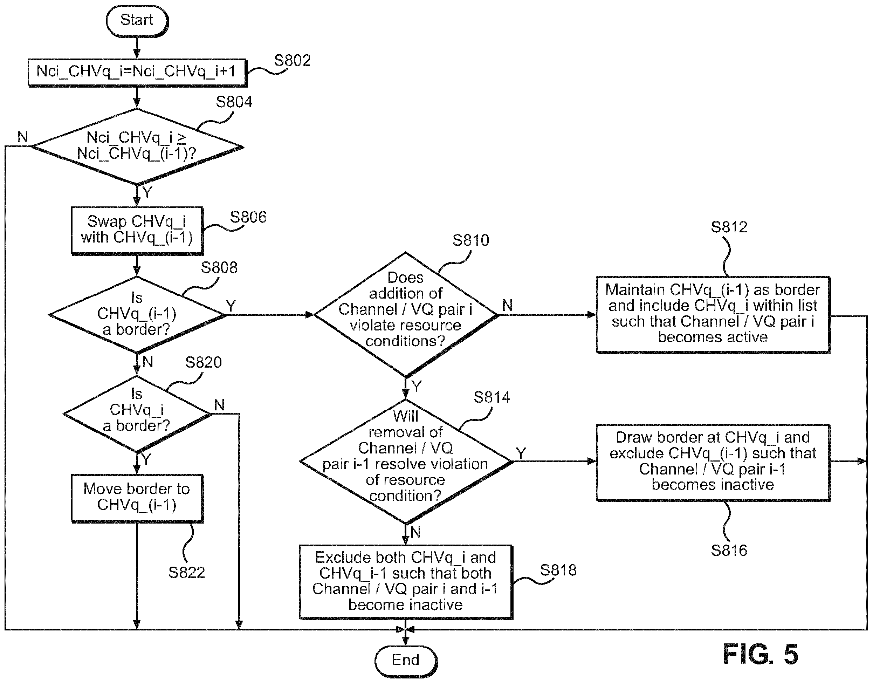

The multicast controller 100 then performs a method for border change analysis within the asset list for the access network AN1 at step S620. An example embodiment of a method for border change analysis will be described in more detail below with regard to FIG. 5.

FIG. 5 is a flow chart illustrating a method for border change analysis according to an example embodiment. For example, purposes the border change analysis method shown in FIG. 5 will be described with regard to an example in which the Channel/VQ pair i associated with Channel/VQ block CHVq_i is requested by client 102.

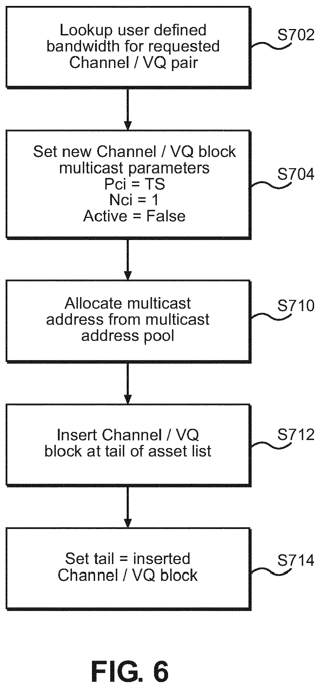

Referring to FIG. 5, after having updated the Psi field for the new per stream block at step S618 in FIG. 6, at step S802 the multicast controller 100 increments the number of IP addresses (or clients) Nci_CHVq_i currently tuned to the Channel/VQ pair i. In more detail, at step S802, the multicast controller 100 increments the value Nci_CHVq_i of the Nci field at the Channel/VQ block CHVq_i (Nci_CHVq_i = Nci_CHVq_i + 1).

At step S804, the multicast controller 100 determines whether the number of IP addresses currently tuned to the Channel/VQ pair i is greater than or equal to the number of IP addresses currently tuned to the Channel/VQ pair i-1 by comparing the incremented value Nci_CHVq_i for the Channel/VQ block CHVq_i with the value Nci_CHVq_(i-1) of the Nci field for the previous Channel/VQ block CHVq_(i-1) in the asset list.

If the number of IP addresses currently tuned to the Channel/VQ pair i is less than the number of IP addresses tuned to the Channel/VQ pair i-1 (Nci_CHVq_i < Nci_CHVq_(i-1)), then the multicast controller 100 maintains the Channel/VQ blocks CHVq_1 through CHVq_N in the asset list in their current order, and the process terminates.

Returning to step S804, if the number of IP addresses currently tuned to the Channel/VQ pair i is greater than or equal to the number of IP addresses tuned to the Channel/VQ pair i-1 (Nci_CHVq_i ≥ Nci_CHVq_(i-1)), then the multicast controller 100 swaps the positions of the Channel/VQ block CHVq_i and the Channel/VQ block CHVq_(i-1) such that the Channel/VQ block CHVq_i is closer to the head of the asset list than the Channel/VQ block CHVq_(i-1). In one example, the multicast controller 100 may swap the positions of the Channel/VQ blocks by updating the Previous TRAK field 310A and the Next TRAK field 310B of the appropriate Channel/VQ blocks.

At step S808, the multicast controller 100 determines whether the Channel/VQ block CHVq_(i-1) is the border Channel/VQ block in the asset list. In one example, the multicast controller 100 determines whether the Channel/VQ block CHVq_(i-1) is the border Channel/VQ block by accessing the border block 208. If the pointer field Ptr_block 2082 points to the Channel/VQ block CHVq_(i-1), then the multicast controller 100 determines that the Channel/VQ block CHVq_(i-1) is the border Channel/VQ block in the asset list.

If the Channel/VQ block CHVq_(i-1) is not the border Channel/VQ block, then the multicast controller 100 determines whether the Channel/VQ block CHVq_i is a border Channel/VQ block at step S820. The multicast controller 100 determines whether the Channel/VQ block CHVq_i is a border Channel/VQ block in the same or substantially the same manner as discussed above with regard to step S808.

If the Channel/VQ block CHVq_i is the border Channel/VQ block in the asset list, then at step S822 the multicast controller 100 moves the border within the asset list to the Channel/VQ block CHVq_(i-1) by updating the Ptr_block field 2082 at the border block 208 to point to the Channel/VQ block CHVq_(i-1), and the process terminates.

Returning to step S820, if the Channel/VQ block CHVq_i is also not the border Channel/VQ block in the asset list, then the multicast controller 100 concludes a change in border in the asset list is not required as a result of the swapping of positions of the Channel/VQ blocks CHVq_(i-1) and CHVq_i at step S806, and the process terminates.

Returning to step S808, if the Channel/VQ block CHVq_(i-1) is the border Channel/VQ block in the asset list, then at step S810 the multicast controller 100 determines whether the addition of the Channel/VQ pair i to the set of active multicast channels for the access network AN1 violates any resource conditions for the access network AN1. In one example, the resource conditions for the access network AN1 may include a threshold maximum bandwidth and/or a threshold maximum number of multicast channels for the access network AN1. The resource conditions may be set by a network operator according to empirical evidence and/or network conditions.

In one example, the multicast controller 100 may determine whether the addition of the Channel/VQ pair i violates resource conditions for the access network AN1 by comparing the total bandwidth resulting from the addition of the Channel/VQ pair i to the set of active multicast channels (e.g., an aggregate bandwidth of the Channel/VQ pairs in the set of active multicast channels) with the threshold maximum bandwidth for the access network AN1 (e.g., as obtained from the Band_limit field 2088 of the border block 208). If the total bandwidth resulting from the addition of the Channel/VQ pair i exceeds the threshold maximum bandwidth, then the multicast controller 100 determines that the addition of the Channel/VQ pair i violates a resource condition for the access network AN1.

In another example, the multicast controller 100 may determine whether the addition of the Channel/VQ pair i violates resource conditions for the access network AN1 by comparing the total number of channels resulting from the addition of the Channel/VQ pair i to the set of active multicast channels with the threshold maximum bandwidth (e.g., as obtained from the Chnl_limit field 2090 of the border block 208). If the total number of channels in the set of active multicast channels after addition of the Channel/VQ pair i exceeds the threshold maximum number of channels, then the multicast controller 100 determines that the addition of the Channel/VQ pair i violates a resource condition for the access network AN1. Although example embodiments are discussed with regard to only two resource conditions, example embodiments should not be limited to these examples. Rather, any other suitable resource conditions and/or parameters may be used in addition to, or in place of, those discussed herein.

Returning to FIG. 5, if the multicast controller 100 determines that the addition of the Channel/VQ pair i does not violate any resource conditions within the access network AN1 at step S810, then the multicast controller 100 maintains the Channel/VQ block CHVq_(i-1) as the border Channel/VQ block in the asset list at step S812, and includes the Channel/VQ block CHVq_i among the assets above the border Channel/VQ block CHVq_(i-1) such that the Channel/VQ pair i is included in the set of active multicast channels and actively multicast in the access network AN1. In one example, the multicast controller 100 sets the Active field 306 at the Channel/VQ block CHVq_i to activate multicasting of the Channel/VQ pair i. In this example, the moving of the border Channel/VQ block and setting the Active field 306 causes the multicast controller 100 to direct the multicast server 140 to include the Channel/VQ pair i in the set of active multicast Channel/VQ pairs for the access network AN1.

Returning to step S810, if the multicast controller 100 determines that the addition of the Channel/VQ block CHVq_i violates one or more resource conditions in the access network AN1, then at step S814 the multicast controller 100 determines whether removal of the Channel/VQ pair i-1 from the set of active multicast channels within the access network AN1 resolves the violation of one or more resource conditions (e.g., by reducing the total bandwidth below the threshold maximum bandwidth and/or by reducing the total number of multicast channels below the threshold number of channels).

If removal of the Channel/VQ pair i-1 from the set of active multicast channels resolves the violation of (satisfies) resource conditions, then at step S816 the multicast controller 100 moves the border Channel/VQ block to the Channel/VQ block CHVq_i, and sets the Active field 306 at the Channel/VQ block CHVq block CHVq_(i-1) to 'False', thereby excluding the Channel/VQ pair i-1 from the set of active multicast channels. The process then terminates. The multicast controller 100 moves the border Channel/VQ block to the Channel/VQ block CHVq_i in the same or substantially the same manner as discussed above with regard to step S822. The moving of the border Channel/VQ block and setting the Active field 306 in this case causes the multicast controller 100 to direct the multicast server 140 to exclude the Channel/VQ pair i-1 from the set of active multicast Channel/VQ pairs for the access network AN 1.

Returning to step S814, if the multicast controller 100 determines that removing of the Channel/VQ pair i-1 from the set of active multicast channels will not resolve the violation of resource conditions in the access network AN1, then the multicast controller 100 excludes both Channel/VQ pairs i and i-1 from the set of active multicast channels, and the process terminates. In one example, the multicast controller 100 may exclude the Channel/VQ pairs i and i-1 by moving the border Channel VQ block to the Channel/VQ block CHVq_(i-2) in the same or substantially the same manner as discussed above with regard to step S822, and setting the flag in the Active field 306 in each of the Channel/VQ blocks CHVq_i and CHVq_(i-1) to 'False'. In more detail, for example, the moving of the border Channel/VQ block and setting the Active field 306 in this case causes the multicast controller 100 to exclude both Channel/VQ pairs i and i-1 from the set of active multicast Channel/VQ pairs for the access network AN1. In one example, the multicast controller 100 directs the termination node 120 (e.g., by sending an updated list of popular channels) to exclude both Channel/VQ pairs i and i-1, such that these Channel/VQ pairs are not available for multicast to clients in the access network AN1.

Returning now to step S606 in FIG. 4, if Channel/VQ search tree 206 is not able to provide the pointer ptr_CHVq_i in the CHVq search tree 206 (ptr_CHVq_i = NULL), then the multicast controller 100 creates and/or obtains a new Channel/VQ block at step S622. The multicast controller 100 may create and/or obtain a new Channel/VQ block by creating a new block from available memory in any well-known manner.

The multicast controller 100 then handles the new Channel/VQ block at step S624, and adds a pointer to the new Channel/VQ block to the Channel/VQ search tree 206 at step S626. The process then proceeds to step S608, and continues as discussed above.

An example embodiment of a method of handling a new Channel/VQ block (step S624 in FIG. 4) will be described in more detail with regard to FIG. 6.

FIG. 6 is a flow chart illustrating a method for handling a new Channel/VQ block, according to an example embodiment.

Referring to FIG. 6, at step S702 the multicast controller 100 looks up the defined bandwidth for the requested Channel/VQ pair. The defined bandwidth for a requested Channel/VQ pair may be configured (e.g., previously configured) by a network operator based on policy, which may be based on network capacity, other traffic and QoS requirements.

At step S704, the multicast controller 100 initializes the Pci field, the Nci field, and the Active field of the new Channel/VQ block as follows:
Pci = TS
Nci = 1
Active = False

In this example, Pci, Nci and Active may be referred to herein as channel parameters for the new Channel/VQ block.

At step S710, the multicast controller 100 allocates a multicast address to the new Channel/VQ block (and associated Channel/VQ pair) from the multicast address pool. A multicast address pool may include multicast addresses, which may be configured and/or defined by a network operator as desired.

At step S712, the multicast controller 100 inserts the new Channel/VQ block at the tail of the asset list. In the example data structure arrangement shown in FIG. 2, the multicast controller 100 inserts the new Channel/VQ block at the tail of the asset list after the Channel/VQ block CHVq_N. The multicast controller 100 then sets the tail of the asset list to the new Channel/VQ block at step S714, and the process terminates. In one example, at step S714 the multicast controller 100 may identify the new Channel/VQ block as the tail of the asset list by setting the Next TRAK field 310B of the new Channel/VQ block to NULL, setting the Prev TRAK field 310A of the new Channel/VQ block to the pointer to the Channel/VQ block CHVq_N, and updating the Next TRAK field 310B of the Channel/VQ block CHVq_N with the pointer to the new Channel/VQ block.

According to at least some example embodiments, the multicast controller 100 may periodically perform a cleanup operation to remove Channel/VQ blocks, which no longer require multicasting or are no longer needed in the asset list.

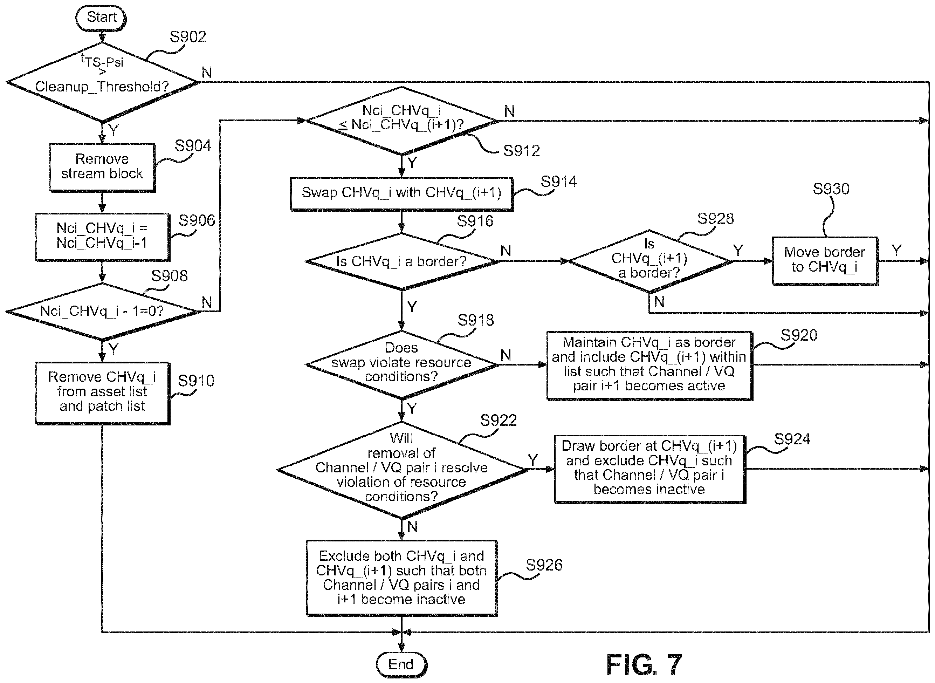

FIG. 7 is a flow chart illustrating an example embodiment of a method for managing multicast streams within an access network. The example embodiment shown in FIG. 7 is an example of the above-mentioned cleanup operation. According to at least one example embodiment, the method shown in FIG. 7 may be performed for each active pointer (e.g., each stream block PSI-1 through PSI-7 in FIG. 2) iteratively and/or periodically (e.g., about every 120 seconds). For example purposes, an iteration of the method shown in FIG. 7 will be described with regard to source IP address IP-5, per stream block PSI-5, and Channel/VQ block CHVq_i, which corresponds to Channel/VQ pair i.

Referring to FIG. 7, at step S902 the multicast controller 100 determines whether a length of time t_{TS-Psi} since the multicast controller 100 has received a request for the Channel/VQ pair i from the source IP address IP-5 exceeds a cleanup threshold value Cleanup_Threshold. The length of time t_{TS-Psi} corresponds to a difference between the current time TS and the value of the Psi field at the per stream block PSI-5. In one example, the cleanup threshold value Cleanup_Threshold may be about 120 seconds. However, example embodiments should not be limited to this example.

If the length of time t_{TS-Psi} is less than or equal to the cleanup threshold value Cleanup_Threshold (t_{TS-Psi} ≤ Cleanup_Threshold), then the current iteration of the process terminates, and the multicast controller 100 proceeds to the next stream block (e.g., stream block PSI-6 in FIG. 2).

Returning to step S902, if the length of time t_{TS-Psi} exceeds (is greater than) the cleanup threshold value Cleanup_Threshold (t_{TS-Psi} > Cleanup_Threshold), then the multicast controller 100 removes the stream block PSI-5 from the data structure arrangement at step S904.

At step S906, the multicast controller 100 then decrements the number of IP addresses currently tuned to the Channel/VQ pair i by decrementing the value Nci_CHVq_i of the Nci field 308 at the Channel/VQ block CHVq_i (Nci_CHVq_i = Nci_CHVq_i - 1).

At step S908, the multicast controller 100 determines whether there are any IP addresses currently tuned to the Channel/VQ pair by checking whether the value Nci_CHVq_i - 1 is 0.

If the decremented value Nci_CHVq_i - 1 is 0 (Nci_CHVq_i - 1 = 0), then the multicast controller 100 removes the Channel/VQ block CHVq_i from the asset list at step S910. Also at step S910, the multicast controller 100 patches the asset list to account for the removal of the Channel/VQ block CHVq_i from the asset list. In at least this example, the multicast controller 100 patches the asset list by updating the Next TRAK field 310B at the Channel/VQ block CHVq_(i-1) to point to the Channel/VQ block CHVq_(i+1), and updating the Previous TRAK Field 310A at the Channel/VQ block CHVq_(i+1) to point to the Channel/VQ block CHVq_(i-1).

After patching the asset list at step S910, the current iteration of the process terminates, and the multicast controller 100 proceeds to the next stream block.

Returning to step S908, if the value Nci_CHVq_i - 1 is not 0 (Nci_CHVq_i - 1 ≠ 0), then at step S912 the multicast controller 100 determines whether the number of IP addresses currently tuned to the Channel/VQ pair i (Nci_CHVq_i - 1) is less than or equal to the number of IP addresses currently tuned to the Channel/VQ pair i+1 by comparing the value Nci_CHVq_i - 1 with the value Nci_CHVq_(i+1) of the Nci field 308 at the next Channel/VQ block CHVq_(i+1).

If the value Nci_CHVq_i - 1 is greater than the value Nci_CHVq_(i+1) (Nci_CHVq_i > Nci_CHVq_(i+1)), then the current iteration of the process terminates, and the multicast controller 100 proceeds to the next stream block.

Returning to step S912, if the value Nci_CHVq_i - 1 is less than or equal to the value Nci_CHVq_(i+1) (Nci_CHVq_i - 1 ≤ Nci_CHVq_(i+1)), then the multicast controller 100 swaps the positions of the Channel/VQ block CHVq_i and the Channel/VQ block CHVq_(i+1) at step S914. The multicast controller 100 may swap the positions of the Channel/VQ block CHVq_i and the Channel/VQ block CHVq_(i+1) at step S914 in the same or substantially the same manner as discussed above with regard to step S806 in FIG. 5.

At step S916, the multicast controller 100 determines whether the Channel/VQ block CHVq_i is the border Channel/VQ block in the asset list. The multicast controller 100 may determine whether the Channel/VQ block CHVq_i is the border Channel/VQ block in the same or substantially the same manner as discussed above with regard to step S808 in FIG. 5.

If the multicast controller 100 determines that the Channel/VQ block CHVq_i is not the border Channel/VQ block in the asset list, then at step S928 the multicast controller 100 determines whether the Channel/VQ block CHVq_(i+1) is the border Channel/VQ block in the asset list in the same or substantially the same manner as discussed above with regard to step S808 in FIG. 5.

If the Channel/VQ block CHVq_(i+1) is the border Channel/VQ block in the asset list, then the multicast controller 100 moves the border to the Channel/VQ block CHVq_i by updating the border block 208 as discussed above with regard to step S822 in FIG. 5. The current iteration of the process then terminates, and the multicast controller 100 proceeds to the next stream block.

Returning to step S928, if the Channel/VQ block CHVq_(i+1) is not the border Channel/VQ block, then the current iteration of the process terminates, and the multicast controller 100 proceeds to the next stream block.

Returning to step S916, if the Channel/VQ block CHVq_i is the border Channel/VQ block in the asset list, then at step S918 the multicast controller 100 determines whether the swap performed at step S914 will violate any resource conditions within the access network AN1. The multicast controller 100 may determine whether the swap performed at step S914 will violate any resource conditions in the same or substantially the same manner as discussed above with regard to step S810 in FIG. 5.

If the multicast controller 100 determines that the swap performed at step S914 does not violate any resource conditions, then the multicast controller 100 maintains the Channel/VQ block CHVq_i as the border Channel/VQ block at step S920, and includes the Channel/VQ pair i+1 among the set of active multicast channels such that the Channel/VQ pair i+1 is multicast in the access network AN1. Also at step S920, the multicast controller 100 sets the Active field 306 at the Channel/VQ block CHVq_(i+1) to 'True'.

Returning to step S918, if the multicast controller 100 determines that the addition of the Channel/VQ pair i+1 will violate one or more resource conditions within the access network AN1, then at step S922 the multicast controller 100 determines whether removal of the Channel/VQ pair i from the set of active multicast channels will resolve the violation of the one or more resource conditions. The multicast controller 100 may determine whether removal of the Channel/VQ pair i will resolve the violation of the one or more resource conditions in the same or substantially the same manner as discussed above with regard to step S814 in FIG. 5

If removal of the Channel/VQ pair i from the set of active multicast channels in the access network AN1 will resolve the violation of resources, then the multicast controller 100 moves the border Channel/VQ block to the Channel/VQ block CHVq_(i+1) at step S924, thereby excluding the Channel/VQ pair i from the set of active multicast channels. The multicast controller 100 may move the border Channel/VQ block to the Channel/VQ block CHVq_(i+1) in the same or substantially the same manner as discussed above with regard to step S822 in FIG. 5. The current iteration of the process then terminates, and the multicast controller 100 moves to the next stream block.

Returning to step S922, if removing the Channel/VQ pair i from the set of active multicast channels in the access network AN1 will not resolve the violation of the one or more resource conditions, then the multicast controller 100 excludes both Channel/VQ pairs i and i+1 from the set of active multicast channels in the access network AN1 at step S926. The multicast controller 100 may exclude the Channel/VQ pairs i and i+1 from the set of active multicast channels in the same or substantially the same manner as discussed above with regard to step S818 in FIG. 5. The current iteration of the process then terminates, and the multicast controller 100 moves on to the next stream block.

While example embodiments are described herein from the perspective of the multicast controller 100, it will be understood that the functions may be performed by the one or more processors 1002 in cooperation with the cooperating modules/processes 1005, the I/O device 1006 and the memory 1004 of the multicast controller 100 shown in FIG. 8.

One or more example embodiments may enable optimization and/or improvement of channels and VQ levels being multicast within an access network together so that the total bandwidth may be reduced. One or more example embodiments may also enable dynamic adaptation of multicast Channel/VQ pairs so that multicast channels in an access network remain substantially optimal.

One or more example embodiments may provide improved network efficiency by updating Channel lists including VQ levels. One or more example embodiments may also reduce bandwidth waste in access networks by optimizing Channel/VQ (asset) lists for each access network independently.

Benefits, other advantages, and solutions to problems have been described above with regard to specific embodiments of the invention. However, the benefits, advantages, solutions to problems, and any element(s) that may cause or result in such benefits, advantages, or solutions, or cause such benefits, advantages, or solutions to become more pronounced are not to be construed as a critical, required, or essential feature or element of any or all the claims.

Reference is made in detail to embodiments, examples of which are illustrated in the accompanying drawings, wherein like reference numerals refer to the like elements throughout. In this regard, the example embodiments may have different forms and should not be construed as being limited to the descriptions set forth herein. Accordingly, the example embodiments are merely described below, by referring to the figures, to explain example embodiments of the present description. Aspects of various embodiments are specified in the claims.

## Claims

1. A network element (100) comprising:
a memory (1004) storing a data structure arrangement, the data structure arrangement including
an ordered list of asset blocks (CHVq_1, ... CHVq_N) having a head end and a tail end, each of the asset blocks indicating a number of clients (102, 104, 106, 108, 110, 112) in an access network (AN1, AN2, AN3) currently streaming video content of a corresponding channel, the asset blocks being ordered according to the number of clients currently streaming the video content for each channel, and
a border structure block (208) storing a pointer to a border asset block within the ordered list of asset blocks, the pointer to the border asset block defining an active set of multicast channels for the access network, and causing the network element to direct a termination node (120, 122) to provide the active set of multicast channels to the clients in the access network.

2. The network element of claim 1, wherein each channel is indicative of a channel and video quality pair.

3. The network element of claim 1, wherein
a first of the clients is identified by a first IP address;
the first of the clients is currently streaming video content for a first channel corresponding to a first of the asset blocks in the ordered list; and
the data structure arrangement further includes
a per stream block (PSI-1, ..., PSI-7) linking the first IP address with the first asset block, and
a data structure (202) linking the first IP address with the per stream block.

4. The network element of claim 3, wherein
the data structure is an IP hash table.

5. The network element of claim 3, wherein
the per stream block stores a time at which a most recent request for the first channel was received from the first IP address; and/or
the network element further includes at least one processor (1002) coupled to the memory, the at least one processor configured to execute computer-readable instructions to
determine whether a length of time since receipt of the most recent request exceeds a cleanup threshold value, and
remove the per stream block from the data structure arrangement if the length of time exceeds the cleanup threshold value.

6. The network element of claim 5, wherein the at least one processor is further configured to execute the computer-readable instructions to
remove the first asset block from the ordered list of asset blocks if the number of clients currently streaming the first channel is zero after removal of the per stream block.

7. The network element of claim 1, further comprising:
at least one processor coupled to the memory, the at least one processor configured to execute computer-readable instructions to
identify a request for a channel without a corresponding asset block in the ordered list,
generate an asset block representing the requested channel in response to the request,
initialize parameters for the generated asset block, and
insert the generated asset block at the tail end of the ordered list.

8. The network element of claim 1, wherein the access network is one of a cable access network, a Digital Subscriber Line Access Multiplexer (DSLAM)-based access network, or a passive optical network.

9. A non-transitory machine-readable storage medium encoded with instructions executable by a processor in a network element (100), the machine-readable storage medium comprising instructions to:
determine whether a first number of clients currently streaming video content for a first channel within the access network is greater than or equal to a second number of clients currently streaming video content for a first multicast channel within an active set of multicast channels for the access network, the multicast channels in the active set of multicast channels corresponding to a set of asset blocks in an ordered list of asset blocks (CHVq_1, ... CHVq_N) having a head end and a tail end, each of the asset blocks indicating a number of clients (102, 104, 106, 108, 110, 112) in an access network (AN1, AN2, AN3) currently streaming video content of a corresponding channel, the asset blocks being ordered according to the number of clients currently streaming the video content for each channel,
determine whether addition of the first channel will violate a resource condition for the access network, and
add the first channel to the active set of multicast channels if the addition of the first channel will not violate the resource condition for the access network.

10. The non-transitory machine-readable storage medium of claim 9, further encoded with instructions to:
add, when the first channel corresponds to a first asset block in the ordered list of asset blocks, the first channel to the active set of multicast channels by adjusting a position of the first asset block in the ordered list of asset blocks; and/or
remove the first asset block from the ordered list of asset blocks when the first number of clients currently streaming video content for the first channel is zero.

11. The non-transitory machine-readable storage medium of claim 9, further encoded with instructions to:
determine whether removing the first multicast channel from the active set of multicast channels will resolve the violation of the resource condition if the addition of the first channel will violate the resource condition;
exclude the first multicast channel from the active set of multicast channels if removing the first multicast channel from the active set of multicast channels will resolve the violation of the resource condition; and
exclude both the first channel and the first multicast channel from the active set of multicast channels if removing the first multicast channel from the active set of multicast channels will not resolve the violation of the resource condition.

12. The non-transitory machine-readable storage medium of claim 9, further encoded with instructions to:
identify a request for a channel without a corresponding asset block,
generate an asset block representing the requested channel in response to the request,
initialize parameters for the generated asset block, and
insert the generated asset block at the tail end of the ordered list.
